# EUROPEAN PATENT APPLICATION

(11) **EP 0 781 814 A2**
(43) Date of publication of application: **02.07.1997**
(21) Application number: 96309465.1
(22) Date of filing: 23.12.1996
(51) Int. Cl.: C08L 83/08

(54) **Curable organopolysiloxane composition and method for bonding objects using said composition**

(30) Priority: 28.12.1995 JP 352804/95
(71) Applicant: Dow Corning Toray Silicone Co., Ltd., Chuo-ku, Tokyo (JP)
(72) Inventor: Nakanishi, Junji, Dow Corning Toray Sil. Co. Ltd., Ichihara-shi, Chiba Prefecture (JP); Yoshitake, Makoto, Dow Corning Toray Sil. Co. Ltd., Ichihara-shi, Chiba Prefecture (JP)
(74) Representative: Kyle, Diana

(57) **Abstract**

A curable organopolysiloxane composition remains fluid when held under seal in the dark, rapidly forms a nonfluid tacky mass when exposed to high energy radiation, such as ultraviolet or electron beam radiation, and subsequently continues to cure through an atmospheric moisture-mediated reaction to yield an elastic material. The curable organopolysiloxane composition with a viscosity at 25°C not exceeding 3,000 Pa.s, comprises the product obtained by mixing an alkenyl-functional silicone resin, a mercapto-containing organopolysiloxane that contains siloxy units functionalized with both mercapto and Si-bonded alkoxy, and does not contain alkenyl, and a condensation reaction-accelerating catalyst. The curable organopolysiloxane composition is used in a method for making an assembly by bonding a substrate and an adherend by coating the substrate with the composition, irradiating the coated substrate with high energy radiation, bringing the adherend into contact with the irradiated surface, and thereafter holding the assembly in a moisture-containing atmosphere.

## Description

This invention introduces a curable organopolysiloxane composition that remains fluid when held under seal in the dark; rapidly forms a nonfluid tacky mass when exposed to high energy radiation, such as ultraviolet or electron beam radiation, and subsequently continues to cure through an atmospheric moisture-mediated reaction to yield an elastic material. The invention also provides a method for bonding a substrate and an adherend using said composition.

One-part room-temperature-curable organopolysiloxane compositions exhibit excellent heat stability, electrical properties, and weathering resistance. As a consequence, they are used, for example, for adhesives, potting materials, and coatings. However, conventional one-part room-temperature-curable organopolysiloxane compositions require relatively long periods of time to achieve a complete cure since they cure by moisture-mediated condensation reactions. This problem has led to the appearance of compositions that combine the conventional moisture-mediated curing reactions with ultraviolet-curing reactions (high energy radiation). The latter reactions, which initiate immediately upon exposure to ultraviolet (UV) radiation are represented in the art by JP-AS 60-231761 (equivalent to US Patent 4,579,636), 62-96562 (equivalent to US Patent 4,742,092), and 62-197453 (equivalent to US Patent 4,735,971; JP-B 5-63514 equivalent to EP-A 0332400); and 5-295271, 5-295272, 6-32985 (equivalent to US Patent 5,371,116, and 6-57143.

These compositions exert an initial adhesion by increasing the viscosity and by solidifying after irradiation with UV, for example, and when the irradiated surface makes contact with an object, adhesion is observed. However, since they have flowability (even when the viscosity of these compositions was increased), their adhesive retention was not sufficient. When solidification occurred, the adhesion of the surface of the composition was decreased, and it was difficult to adhere an object to it.

The inventors achieved the present invention as a result of extensive research directed to solving the above problems.

An object of the present invention is to provide a curable organopolysiloxane composition that remains fluid when held under seal in the dark, rapidly forms a nonfluid tacky mass when exposed to high energy radiation such as ultraviolet on electron beam radiation, and subsequently continues to cure by an atmospheric moisture-mediated reaction to yield an elastic material. Another object of this invention is to provide a method for bonding a substrate and an adherend using our composition.

The present invention is a curable organopolysiloxane composition with a viscosity at 25°C not exceeding 3,000 Pa.s, comprising (A) 30 to 75 weight%, based on the combined weight of (A) and (B) being equal to 100 weight%, of a silicone resin with the average unit formula

R¹ ₐSiO_{(4 - a) /2}

in which each R¹ is selected from the group consisting of alkoxy, substituted monovalent hydrocarbon groups, and unsubstituted monovalent hydrocarbon groups, wherein the substituted and unsubstituted monovalent hydrocarbon groups constitute at least 80 mole% of R¹ and alkenyl groups constitute at least 2 mole% of said monovalent hydrocarbon groups, and a has an average value of from 0.75 to 2.5; (B) 70 to 25 weight%, based on the combined weight of (A) and (B) being 100 weight%, of a mercapto-containing organopolysiloxane that has a viscosity at 25°C of 0.1 to 100 Pa.s and contains terminal mercapto-functional siloxy units with the general formula 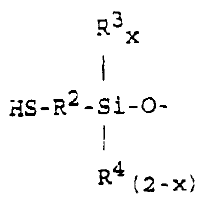 in which R² is a C₁ to C₁₀ alkylene, R³ is an alkoxy, R⁴ is an alkyl, and x is 1 or 2, wherein the organopolysiloxane does not contain alkenyl; and (C) a condensation reaction catalyst at 0.01 to 10 weight parts for each 100 weight parts of the total of components (A) and (B).

The present invention is further a method for making an assembly by bonding a substrate and an adherend comprising coating the substrate with the above curable organopolysiloxane composition; irradiating the coated substrate with high energy radiation; bringing the adherend into contact with said irradiated surface to obtain an assembly; and thereafter holding the assembly in a moisture-containing atmosphere to complete the curing process.

The silicone resin (A), which causes our composition to manifest tack after exposure to high energy radiation, has the average unit formula

R¹ ₐSiO_{(4 - a)/2} .

R¹ is selected from alkoxy and substituted or unsubstituted monovalent hydrocarbon groups wherein the monovalent hydrocarbon groups constitute at least 80 mole% of R¹. The unsubstituted monovalent hydrocarbon groups are exemplified by alkyl such as methyl, ethyl, propyl, butyl, pentyl, isopropyl, Isobutyl, cyclopentyl and cyclohexyl; alkenyl such as vinyl, allyl and hexenyl; aryl such as phenyl or naphthyl; and aralkyl such as benzyl or 1-phenylethyl. The substituted monovalent hydrocarbon groups are specifically exemplified by haloalkyl such as chloromethyl, 3-chloropropyl, 3,3,3-trifluoropropyl and nonafluorobutylethyl; haloaryl such as 4-chlorophenyl or 3,5-dichlorophenyl, and 1,5-difluorophenyl; and haloalkyl-substituted aryl such as 4-chloromethylphenyl or 4-trifluoromethylphenyl.

Moreover, at least 2 mole% of the monovalent hydrocarbon groups must be alkenyl, and preferably from 2 to 10 mole% is alkenyl. Vinyl is the preferred alkenyl group, and methyl is preferred for the non-alkenyl of R¹. The alkoxy is methoxy, ethoxy, and propoxy, with methoxy being preferred. The subscript a has an average value of from 0.75 to 2.5. The silicone resin of (A) is an organopolysiloxane that contains within its molecule the trifunctional unit R¹SiO_{3/2} (T unit) and/or the tetrafunctional unit SiO_{4/2} (Q unit). Component (A) is exemplified by silicone resins (MQ resins) comprising R¹₃SiO_{1/2} siloxane units (M units) and SiO_{4/2} siloxane units (Q units); siloxane resins (MTQ resins) comprising R¹₃SiO_{1/2} siloxane units (M units), R¹SiO_{3/2} siloxane units (T units) , and SiO_{4/2} siloxane units (Q units); silicone resins (MDQ resins) comprising R¹₃SiO_{1/2} siloxane units (M units), R¹₂SiO_{2/2} siloxane units (D units), and SiO_{4/2} silcxane units (Q units); silicone resins (MDTQ resins) comprising R¹₃SiO_{1/2} siloxane units (M units), R¹₂SiO_{2/2} siloxane units (D units) , R¹SiO_{3/2} siloxane units (T units), and SiO_{4/2} siloxane units (Q units); and siliccne resins (T resins) composed of only the R¹SiO_{3/2} siloxane units (T units). Silicone resins with the average compositional formulas

(R⁵ ₃SiO_{1/2})_{b}(SiO_{4/2})_{c} or (R⁵ ₃SiO_{1/2})_{d}(R⁵SiO_{3/2})ₑ(SiO_{4/2})_{f}(R⁶O_{1/2})_{g}

are preferred. R⁵ in the preceding formulas represents substituted or unsubstituted monovalent hydrocarbon groups containing at least 2 mole% of alkenyl. R⁵ is exemplified by the same monovalent hydrocarbon groups given for R¹. R⁶ represents alkyl and is exemplified by methyl, ethyl, and propyl. The alkoxy group (R⁶O_{1/2}) is bonded to silicon. Furthermore, b/c and d/f are each in the range from 0.2/1 to 1.5/1 and preferably are each in the range from 0.5/1 to 1.2/1. e/f is in the range from 0.05/1 to 0.2/1, and g/f is in the range from 0.05/1 to 0.6/1. The silicone resin (A) preferably has a number-average molecular weight in the range from 1,000 to 10,000, and more preferably in the range from 3,000 to 6,000. Moreover, component (A) does not encompass or subsume the organopolysiloxane (B).

The silicone resin (A) is exemplified by organopolysiloxanes with the following formulas, in which Me stands for methyl and Vi stands for vinyl, and does so hereinafter.
(Me₃SiO_{1/2})₃₆(Me₂ViSiO_{1/2})₅(SiO_{4/2})₅₉
(Me₃SiO_{1/2})₄₀(Me₂ViSiO_{1/2})₅(SiO_{4/2})₅₅
(Me₃SiO_{1/2})₃₆(Me₂ViSiO_{1/2})₅(MeSiO_{3/2})₅(SiO_{4/2})₅₉
(Me₃SiO_{1/2})₄₀(ViSiO_{3/2})₇(SiO_{4/2})₆₀(MeO_{1/2})₁₀
(Me₃SiO_{1/2})₃₆(Me₂ViSiO_{1/2})₅(MeSiO_{3/2})₅(SiO_{4/2})₅₉(MeO_{1/2})₁₅
(Me₃SiO_{1/2})₃₅(Me₂ViSiO_{1/2})₅(SiO_{4/2})₆₀(MeO_{1/2})₁₀

The component (B) is a mercapto-containing organopolysiloxane having terminal mercapto-functional siloxy units with the general formula 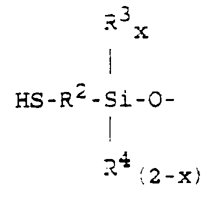 wherein R² is C₁ to C₁₀ alkylene and is exemplified by methylene, ethylene, propylene, isobutylene, and decylene; R³ is alkoxy and is methoxy, ethoxy, propoxy, isopropoxy, butoxy, and isobutoxy, with methoxy and ethoxy being preferred; and R⁴ is alkyl exemplified by methyl, ethyl, propyl, butyl, pentyl, isopropyl, isobutyl, cyclopentyl, and cyclohexyl. The subscript x has a value of 1 or 2. The specified mercapto-functional siloxy unit may be bonded at all the terminals or only at some terminals. Component (B) has a viscosity at 25°C in the range from 0.1 to 100 Pa.s, and preferably in the range from 1 to 80 Pa.s. A component (B) viscosity below 0.1 Pa.s causes problems, such as a reduction in post-exposure tack, and/or such a low viscosity for the claimed composition that our composition may drift or escape prior to exposure to the high energy radiation. A component (B) viscosity in excess of 100 Pa.s also causes prcblems, such as a reduction in adhesive holding strength after exposure to high energy radiation and/or such a high viscosity for the composition that its coatability is impaired.

The molecular structure of organopolysiloxane (B) is preferably straight chain, although some branching may be present. The Si-bonded groups outside the above-described mercapto-functional siloxy unit are preferably selected from mercapto-functional organic groups and substituted or unsubstituted non-alkenyl monovalent hydrocarbon groups. The unsubstituted monovalent hydrocarbon groups are alkyl such as methyl, ethyl, propyl, butyl, pentyl, isopropyl, isobutyl, cyclopentyl, and cyclohexyl; aryl such as phenyl or naphthyl; and aralkyl such as benzyl or 1-phenylethyl. The substituted monovalent hydrocarbon groups are haloalkyl such as chloromethyl, 3-chloropropyl, 3,3,3-trifluoropropyl, and nonafluorobutylethyl; haloaryl such as 4-chlorophenyl, 3,5-dichlorophenyl, and 3,5-difluorophenyl; and haloalkyl-substituted aryl such as 4-chloromethylphenyl and 4-trifluoromethylphenyl. Methyl is the preferred monovalent hydrocarbon group. The mercapto-functional organic group is mercaptopropyl or mercaptomethyl.

Organopolysiloxane (B) is exemplified by compounds with the following formulas, in which Me Et denotes ethyl, and Ph denotes phenyl, and does so hereafter. 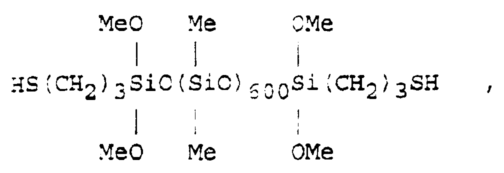 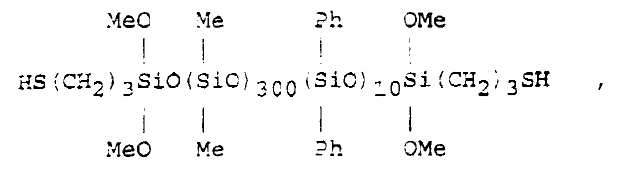 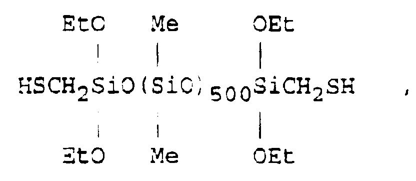 and

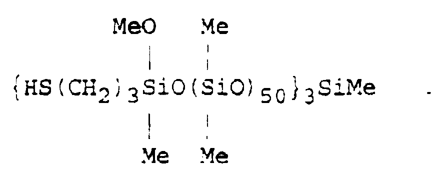

The condensation reaction catalyst used as component (C) in the present invention functions to accelerate the hydrolysis and condensation of the alkoxy (R³) in component (B). These condensation catalysts are known in the art and can be used as component (C). For example, tetraalkoxytitanium compounds such as tetraisopropoxytitanium or tetrabutoxytitanium; titanium complexes such as diisopropoxybis (ethyl acetoacetate)titanium, diisopropoxybis(acetylacetone)titanium, and dibutoxybis(methyl acetoacetate)titanium; dialkyltin carboxylates such as dibutyltin diacetate, dibutyltin dioctoate, and dibutyltin dilaurate; and tin carboxylates such as stannous octoate. Tetraalkoxytitanium compounds or titanium complexes are preferred.

The curable organcpolysilcxane composition of this invention comprises a main component consisting of the mixture of 30 to 75 weight% component of (A) and 70 to 25 weight% of component (B), where the combined weight cf (A) and (B) is 100 weight percent. Additionally, component (C) is added in an amount of from 0.01 to 10 weight parts, for each 100 weight parts of the total of components (A) and (B). The molar ratio of alkenyl group in component (A) to mercapto group in component (B) is preferably from 1:2 to 20:1 because this additionally facilitates the formation of a tacky mass upon exposure to high energy radiation, e.g., UV or electron beam radiation.

Our curable organopolysiloxane composition, while comprising the above-described components (A) to (C), may also contain a radical photopolymerization initiator, designated as component (D), to additionally facilitate the formation of a tacky mass upon exposure to high energy radiation. Said radical photopolymerization initiator is exemplified by acetophenones such as trichloroacetophenone, 2,2-diethoxyacetophenone or 2,2-dimethoxy-2-phenylacetophenone; and by benzophenones such as benzophenone, methylbenzophenone, p-clorobenzophenone, and p-dimethylaminobenzophenone. The radical photopolymerization initiator is preferably added at from 0.1 to 5 weight%, and more preferably at from 0.2 to 3 weight%, in each case cased on 100 weight% for the total of components (A) and (B). In addition, the claimed composition may also contain the following on an optional basis: storage stabilizers such as alkoxysilane; fillers such as fumed silica; functional or nonfunctional organopolysiloxane gums; plasticizers; thixotropy donors; heat stabilizers; colorants; and adhesion promoters.

Our composition has a viscosity at 25°C no greater than 3,000 Pa.s, and preferably in the range from 10 to 2,000 Pa.s. The capacity to coat our composition on various substrates is strongly impaired when its viscosity exceeds 3,000 Pa.s.

The claimed composition Is prepared by mixing the above-described components (A) to (C), and if required optional component (D). This mixing is preferably implemented under exclusion of moisture and light. When the exclusion of light is not possible, mixing is preferably conducted in a dry atmosphere in the presence of oxygen.

Exposure to high energy radiation, e.g., UV or electron beam radiation, causes our composition to immediately form a tacky mass that exhibits pressure-sensitive adhesiveness. This pressure-sensitive adhesiveness is ordinarily retained for 10 minutes to 2 hours, after which an elastic material is formed through the development of crosslinking under the effect of atmospheric moisture. The claimed composition is thus well-suited for use as a pressure-sensitive adhesive. In more specific terms, our composition can form a bonded assembly during the period in which its pressure-sensitive adhesiveness is retained, or during the ensuing standing in a moisture-containing atmosphere. Either manner will form a completely cured and thoroughly bonded assembly.

The method of this invention for bonding substrates and adherends will now be discussed. Our method comprises coating the above-described curable organopolysiloxane composition onto a particular substrate, preferably uniformly on the surface to which an adherend will contact; exposing the coated composition to high energy radiation, such as ultraviolet or electron beam radiation; bringing the adherend into contact with the irradiated surface to obtain an assembly; and holding the assembly thereby afforded in a moisture-containing atmosphere to complete the curing process.

The following are examples of substrates to which the composition of the present invention may be applied and of adherents that may be brought into contact with said substrates: glass sheet and plate; metal sheet and plate (of copper, iron, stainless steel, aluminum, and zinc; paper such as high- or low-grade papers; plastic sheet and plate (of polyester, polycarbonate, polystyrene, acrylic, methacrylic, and nylon); fibers such as natural or synthetic fibers; and rubber sheet (of natural or synthetic rubber). Coating is preformed, for example, using a brush, bar coater, spin coater, and the like. The curable organopolysiloxane composition is preferably coated in an amount that will give a film thickness in the range from 10 micrometers to 1 mm. The high energy radiation is exemplified by ultraviolet radiation from, for example, a high-pressure mercury lamp, xenon lamp, or metal halide lamp; electron beam radiation; or ionizing radiation. For the present invention, ultraviolet radiation includes visible light from, for example, the sun and fluorescent lamps. The exposure dose is preferably in the range from 20 to 5,000 mJ/cm² in the case of ultraviolet radiation, and preferably in the range from 0.5 to 50 Mrad in the case of electron beam radiation or ionizing radiation. The adherend is preferably contacted with the irradiated surface within 10 minutes to 2 hours after exposure to the high energy radiation. The holding time in the moisture-containing atmosphere will ordinarily be from 2 to 100 hours at ambient temperatures (also referred to as room temperature).

One advantage of our method is that it provides a satisfactory adhesive strength immediately after contact between the adherend and substrate.

The invention will be explained in greater detail below through working examples, in which the values reported for the viscosity were measured at 25°C, Me is methyl, Vi is vinyl, Et is ethyl, and Ph is phenyl. The following method was used to measure the tensile shear adhesive strength of the curable organopolysiloxane compositions.

### Tensile shear adhesive strength

Our curable organopolysiloxane composition was uniformly coated on a glass test panel (thickness = 5 mm, width = 2.5 cm) to give a thickness of approximately 100 micrometers. After standing for 5 minutes, the coated surface was irradiated with ultraviolet radiation (dosage = 300 mJ/cm²) using a conveyor-type ultraviolet radiator (120 W high-pressure mercury lamp). Irradiation was followed by standing for 1 minute or 5 minutes. The irradiated surface was then brought into contact with another glass test panel of the same type as above to give a bonded surface area of 2.5 cm². The assembly was held for the specified period of time (5 minutes or 2, 4, 24, or 168 hours), after which its tensile shear adhesive strength (kPa) was measured by the method of JIS K 6850.

### Example 1

The following were mixed to homogeneity, after which the xylene was removed by heating under reduced pressure: 71.4 g of a 70% xylene solution of silicone resin with the average compositional formula

(Me₃SiO_{1/2})₃₆(Me₂ViSiO_{1/2})₅(SiO_{4/2})₅₉

and a number-average molecular weight of 4,600 and 50.0 g dimethylpolysiloxane (viscosity = 3.9 Pa.s) endblocked by mercapto-functional siloxy units at both terminals and having the following average structural formula. 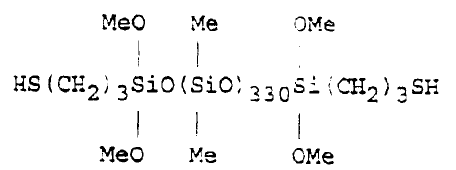 After cooling, a curable organopolysiloxane composition with a viscosity of 160 Pa.s was prepared by the addition of the following with mixing to homogeneity under a dry atmosphere: 0.5 g of 2,2-dimethoxy-2-phenylacetophenone, 1.0 g of tetrabutoxytitanium, and 2.0 g of methyltrimethoxysilane. This composition was submitted to measurement of tensile shear adhesive strength, using in this case a standing time of 1 minute after irradiation with ultraviolet light. The results are reported in Table 1. Cohesive failure was found when the failure mode of the cured product held for 168 hours was visually evaluated after measurement. These results showed that the 2 test panels had been bonded to each other, and that the instant composition had an excellent initial tack immediately after UV exposure, as well as an excellent post-exposure curability due to the action of moisture.

### Example 2

The following were mixed to homogeneity, after which the xylene was removed by heating under reduced pressure: 78.6 g of a 70% xylene solution of silicone resin with the average compositional formula

(Me₃SiO_{1/2})₄₀(Me₂ViSiO_{1/2})₅(SiO_{4/2})₅₅

and a number-average molecular weight of 3,800, and 45.0 g of dimethylpolysiloxane (viscosity = 11.6 Pa.s) endblocked by mercapto-functional siloxy units at both terminals and having the following average structural formula. 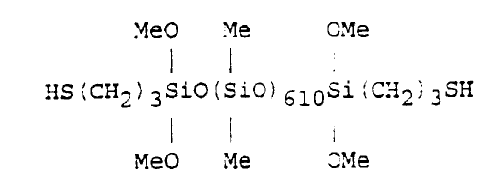 After cooling, a curable organopolysiloxane composition with a viscosity of 460 Pa.s was prepared by the addition of the following with mixing to homogeneity under a dry atmosphere: 0.5 g of 2,2-diethoxyacetophenone, 2.0 g of tetrabutoxytitanium, and 2.0 g methyltrimethoxysilane. This composition was submitted to measurement of the tensile shear adhesive strength, using in this case a standing time of 5 minutes after irradiation with the ultraviolet light. The results are reported in Table 1. Cohesive failure was found when the failure mode of the cured product held for 168 hours was visually evaluated after measurement. These resulta showed that the 2 test panels had been bonded to each other, and that the instant composition had an excellent initial tack immediately after UV exposure, as well as an excellent post-exposure curability due to the action of moisture.

### Example 3

The following were mixed to homogeneity, after which the xylene was removed by heating under reduced pressure: 85.7 g of a 70% xylene solution of silicone resin with the average compositional formula

(Me₃SiO_{1/2})₃₆(Me₂ViSiO_{1/2})₅(MeSiO_{3/2})₅(SiO_{4/2})₅₉(MeO_{1/2})₁₅

and a number-average molecular weight of 3,300, and 40.0 g of dimethylpolysiloxane (viscosity = 11.6 Pa.s) endblocked by mercapto-functional siloxy units at both terminals and having the following average structural formula. 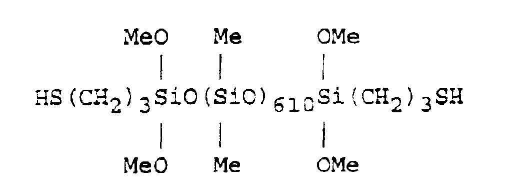 After cooling, a curable organopolysiloxane composition with a viscosity of 130 Pa.s was prepared by the addition of the following with mixing to homogeneity under a dry atmosphere: 1.0 g of 2,2-diethoxyacetophenone and 2.0 g of diisopropoxybis(ethyl acetoacetate)titanium. This composition was submitted to measurement of the tensile shear adhesive strength, using a standing time of 5 minutes after irradiation with ultraviolet light. The results are also reported in Table 1. Cohesive failure was found when the failure mode of the cured product held for 168 hours was visually evaluated after measurement. These results showed that the 2 test panels had been bonded to each other, and that the instant composition had an excellent initial tack immediately after UV exposure as well as an excellent post-exposure curability due to the action of moisture.

### Comparative Example 1

The following were mixed to homogeneity, after which the xylene was removed by heating under reduced pressure: 28.6 g of a 70% xylene solution of silicone resin with the average compositional formula

(Me₃SiO_{1/2})₃₆(Me₂ViSiO_{1/2})₅(SiO_{4/2})₅₉

and a number-average molecular weight of 4,600, and 80.0 g of dimethylpolysiloxane (viscosity = 3.9 Pa.s) endblocked by mercapto-functional siloxy units at both terminals and having the following average structural formula. 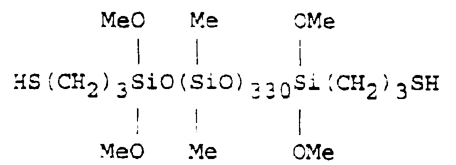 After cooling, a curable organopolysiloxane composition with a viscosity of 32 Pa.s was prepared by the addition of the following with mixing to homogeneity under a dry atmosphere: 0.5 g of 2,2-dimethoxy-2-phenylacetophenone, 1.0 g of tetrabutoxytitanium, and 2.0 g of methyltrimethoxysilane. This composition was submitted to measurement of the tensile shear adhesive strength, using a standing time of 5 minutes after irradiation with the ultraviolet light. The results are reported in Table 1. Interfacial failure was found when the failure mode of the cured product held for 168 hours was visually evaluated after measurement. These results showed that the 2 test panels had not been bonded to each other, and that the instant composition had an unsatisfactory initial tack immediately after UV exposure.

### Comparative Example 2

The following were mixed to homogeneity, after which the xylene was removed by heating under reduced pressure: 71.4 g of a 70% xylene solution of silicone resin with the average compositional formula

(Me₃SiO_{1/2})₄₂(SiO_{4/2})₅₈

and a number-average molecular weight of 4,300, 26.0 g of dimethylpolysiloxane (viscosity = 3.9 Pa.s), endblocked by mercapto-functional siloxy units at both terminals and having the following average structural formula 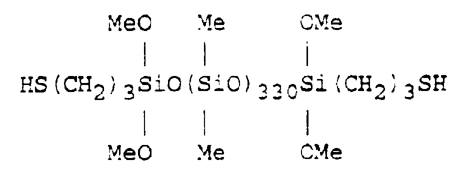 and 24.0 g of vinyl-functional dimethylpolysiloxane with the following average structural formula. 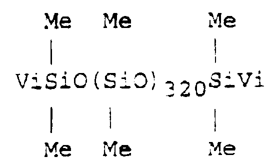 After cooling, a curable organopolysiloxane composition with a viscosity of 32 Pa.s was prepared by the addition of the following with mixing to homogeneity under a dry atmosphere: 0.5 g of 2,2-dimethoxy-2-phenylacetophenone, 1.0 g of tetrabutoxytitanium, and 2.0 g of methyltrimethoxysilane. This composition was submitted to measurement of the tensile shear adhesive strength, using a standing time of 5 minutes after irradiation with the ultraviolet light. The results are reported in Table 1. Cohesive failure was found when the failure mode of the cured product held for 168 hours was visually evaluated after measurement.

**TABLE 1**

| TENSILE SHEAR ADHESIVE STRENGTH (kPa) | | | | | |
|---|---|---|---|---|---|
| | After 5 minutes | After 2 hours | After 4 hours | After 24 hours | After 168 hours |
| Example 1 | 235.4 | 431.5 | 431.5 | 539.4 | 804.1 (cohesive failure) |
| | | | | | |
| Example 2 | 353.0 | 362.8 | 421.7 | 539.4 | 647.2 (cohesive failure) |
| | | | | | |
| Example 3 | 274.6 | 304.0 | 372.7 | 480.5 | 912.0 (cohesive failure) |
| | | | | | |
| Comparative Example 1 | 4.9 | 29.4 | 147.1 | 294.2 | 519.8 (interfacial failure) |
| | | | | | |
| Comparative Example 2 | 14.7 | 196.1 | 264.8 | 372.7 | 568.8 (cohesive failure) |

The curable organopolysiloxane of this invention comprises the above-described components (A) to (C), and more particularly combines alkenyl-functional silicone resin (A) with mercapto-containing organopolysiloxane (B) containing siloxy units functionalized with both mercapto and Si-bonded alkoxy. As a consequence, the claimed curable organopolysiloxane composition has the ability to remain fluid when held under seal in the dark, to rapidly form a nonfluid tacky mass upon exposure to high energy radiation, such as ultraviolet or electron beam radiation, and to thereafter additionally undergo a moisture-mediated curing reaction with the production of an elastic material. The bonding method of our invention, which uses our claimed composition, has the ability to completely and thoroughly bond adherend to substrate.

## Claims

1. A curable organopolysiloxane composition with a viscosity at 25°C not exceeding 3,000 Pa.s, comprising
(A) 30 to 75 weight%, based on the combined weight of (A) and (B) being equal to 100 weight%, of a silicone resin with the average unit formula
R¹ ₐSiO_{(4 - a)/2}
in which each R¹ is a group selected from alkoxy, substituted monovalent hydrocarbon groups, and unsubstituted monovalent hydrocarbon groups, wherein substituted or unsubstituted monovalent hydrocarbon groups constitute at least 80 mole% of R¹ and alkenyl groups constitutes at least 2 mole% of said monovalent hydrocarbon groups, and a has an average value of from 0.75 to 2.5;
(B) 70 to 25 weight%, based on the combined weight of (A) and (B) being 100 weight%, of a mercapto-containing organopolysiloxane that has a viscosity at 25°C of 0.1 to 100 Pa.s and contains terminal mercapto-functional siloxy units with the general formula 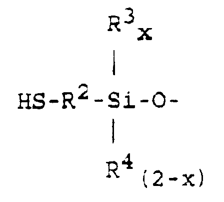 in which R² is a C₁ to C₁₀ alkylene, R³ is an alkoxy, R⁴ is an alkyl, and x is 1 or 2, wherein the organopolysiloxane does not contain alkenyl; and
(C) a condensation reaction catalyst at 0.01 to 10 weight parts, for each 100 weight parts of the total of components (A) and (B).

2. The curable organopolysiloxane composition according to claim 1, in which component (A) is a silicone resin with the average compositional formula
(R⁵ ₃SiO_{1/2})_{b}(SiO_{4/2})_{c}
in which each R⁵ is selected from substituted monovalent hydrocarbon groups or unsubstituted monovalent hydrocarbon groups, where at least 2 mole% of R⁵ is alkenyl and b/c = 0.2/1 to 1.5/1.

3. The curable organopolysiloxane composition according to claim 1, in which component (A) is a silicone resin with the average compositional formula
(R⁵ ₃SiO_{1/2})_{d}(R⁵SiO_{3/2})ₑ(SiO_{4/2})_{f}(R⁶O_{1/2})_{g}
in which each R⁵ is selected from substituted monovalent hydrocarbon groups or unsubstituted monovalent hydrocarbon groups where at least 2 mole% of R⁵ is alkenyl, R⁶ is an alkyl, d/f = 0.2/1 to 1.5/1, e/f = 0.05/1 to 0.2/1, and g/f = 0.05/1 to 0.6/1.

4. The curable organopolysiloxane composition according to any of claims 1-3, in which the molar ratio of alkenyl in component (A) to mercapto group in component (B) is from 1:2 to 20:1.

5. The curable organopolysiloxane composition according to claim 1, further comprising a radical photopolymerization initiator as component (D), and present in an amount of from 0.1 to 5 weight%, based on 100 weight% for the total of components (A) and (B).

6. A method for making an assembly by bonding a substrate and an adherend comprising coating the substrate with the curable organopolysiloxane composition of claim 1, irradiating the ccated substrate with high energy radiation; bringing the adhered into contact with the irradiated surface to obtain an assembly; and thereafter holding the assembly in a moisture-containing atmosphere to complete the curing process.
